# FASCICULE DE BREVET EUROPEEN

(11) **EP 0 664 247 B1**
(45) Date de publication et mention de la délivrance du brevet: **23.07.1997**
(21) Numéro de dépôt: 95100612.1
(22) Date de dépôt: 18.01.1995
(51) Int. Cl.: B60S 1/38

(54) **Essuie-glace équipé d'un déflecteur aérodynamique pour véhicule automobile**
Kraftfahrzeugscheibenwischer mit aerodynamischem Windabweiser
Windscreen wiper equipped with an aerodynamic deflector, for a motor vehicle

(30) Priorité: 25.01.1994 FR 9400926
(43) Date de publication de la demande: 26.07.1995
(73) Titulaire: VALEO SYSTEMES D'ESSUYAGE, 78180 Montigny-Le-Bretonneux (FR)
(72) Inventeur: Teindas, Jean-Louis, F-63190 Ravel (FR)
(74) Mandataire: Gamonal, Didier

(56) Documents cités:
- EP-A- 0 311 471
- EP-A- 0 565 443

## Description

La présente invention concerne un essuie-glace de véhicule automobile.

L'invention concerne plus particulièrement un essuie-glace du tue comportant un bras porte-balai, un balai d'essuie-glace et un déflecteur aérodynamique qui s'étend longitudinalement sur au moins une partie de la longueur du balai d'essuie-glace auquel il est fixé.

Les déflecteurs aérodynamiques sont utilisés en combinaison avec les essuie-glace afin d'augmenter la pression d'appui du balai d'essuie-glace sur la vitre à essuyer, notamment pour les hautes vitesses d'avancement du véhicule.

D'une manière connue, un tel déflecteur aérodynamique est fixé directement ou indirectement, par sa partie centrale, au balai d'essuie-glace.

Le déflecteur aérodynamique qui se présente la plupart du temps sous la forme d'une lame déflectrice s'étend longitudinalement de part et d'autre de sa partie centrale de fixation selon un profil correspondant à celui du balai d'essuie-glace de manière à épouser sensiblement le profil du balai.

Afin de ne pas augmenter exagérément le poids total de l'essuie-glace et afin de permettre de conformer le déflecteur aérodynamique selon un profil à trois dimensions qui soit le plus adapté à celui du balai d' essuie-glace et aux caractéristiques aérodynamiques que l'on souhaite lui conférer, un tel dispositif de déflecteur aérodynamique est généralement réalisé sous la forme d'une lame déflectrice en matière plastique moulée ou en métal cambré.

Il en résulte de cette technique de réalisation que le déflecteur aérodynamique est susceptible de se déformer au voisinage de ses portions d'extrémités situées de part et d'autre de sa partie centrale de fixation. On constate de plus que ces portions d'extrémité vibrent en cours d'utilisation.

L'ensemble de ces inconvénients nuit à un bon rendement aérodynamique de l'essuie-glace, les vibrations pouvant également provoquer une gêne pour le conducteur et des bruits parasites dans le véhicule.

Afin de remédier à ces inconvénients, il a déjà été proposé de fixer le déflecteur aérodynamique en plusieurs points espacés agencés longitudinalement le long du déflecteur aérodynamique, et notamment au moyen de trois vis qui traversent le corps du déflecteur aérodynamique et qui sont reçues dans des trous correspondants formés en vis-à-vis dans l'essuie-glace et par exemple dans une joue latérale du palonnier central du balai d'essuie-glace. Ce mode de fixation est peu satisfaisant dans la mesure où il fait appel à de nombreux composants qui accroissent le coût de l'essuie-glace et les difficultés d'assemblage.

Il a également été proposé dans le document FR-A-2.677.936 un déflecteur aérodynamique du type fixé à l'essuie-glace dans sa partie centrale selon la conception décrite et représentée dans le document FR-A-2.630.069 et dont les moyens de fixation sont complétés par des moyens de fixation supplémentaires éloignés de la partie centrale de fixation. Ici encore, la conception globale des moyens d'accrochage est complexe et ne permet notamment pas d'assurer une fixation du déflecteur aérodynamique sur l'essuie-glace indépendamment de l'assemblage des composants principaux de ce dernier.

Afin de remédier à ces inconvénients, l'invention propose un essuie-glace pour véhicule automobile du type comportant un bras porte-balai, un balai d'essuie-glace et un déflecteur aérodynamique qui s'étend longitudinalement sur au moins une partie de la longueur du balai d'essuie-glace auquel il est fixé (Essuie-glace tel que divulgué dans FR-A-2 677 936), caractérisé en ce que le déflecteur aérodynamique comporte une encoche centrale ouverte selon une direction sensiblement perpendiculaire à la vitre à essuyer et deux encoches opposées d'extrémités qui sont ouvertes selon une direction opposée à celle de l'encoche centrale, et en ce que les encoches du déflecteur aérodynamique coopèrent avec trois points d'accrochage formés en vis-à-vis sur le balai d'essuie-glace.

Selon des caractéristiques ayant trait au mode de réalisation de l'invention :
- l'essuie-glace comporte une structure de répartition de pression comportant au moins un étrier articulé autour d'un axe d'articulation perpendiculaire à la direction générale du balai d'essuie-glace et une extrémité de l'axe d'articulation fait saillie transversalement en direction du déflecteur aérodynamique pour constituer un point d'accrochage central reçu dans l'encoche centrale du déflecteur aérodynamique ;
- l'encoche centrale présente en section la forme d'un U ouvert en direction de la vitre à essuyer ;
- l'encoche centrale coopère avec un collet radial d'accrochage issu de l'extrémité libre de l'axe d'articulation ;
- le déflecteur aérodynamique comporte une patte centrale d'accrochage qui fait saillie transversalement en direction du balai d'essuie-glace et dont l'extrémité libre comporte l'encoche centrale ;
- le déflecteur aérodynamique comporte deux pattes opposées d'extrémités d'accrochage qui font saillie transversalement en direction du balai d'essuie-glace et dont chacune comporte à son extrémité libre une encoche qui coopère avec le bord inférieur d'une joue latérale en vis-à-vis du balai d'essuie-glace ;
- les pattes s'étendent transversalement en saillie depuis une face latérale du déflecteur aérodynamique qui s'étend en regard d'une joue latérale en vis-à-vis du balai d'essuie-glace ;
- le balai d'essuie-glace comporte une structure de répartition de pression comportant au moins un étrier central et les pattes opposées d'extrémités coopèrent avec le bord inférieur d'une joue latérale en vis-à-vis de l'étrier central ;
- le déflecteur aérodynamique est déformable élastiquement selon une direction sensiblement perpendiculaire à la direction longitudinale du déflecteur aérodynamique pour permettre son accrochage sur l'essuie-glace.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en perspective éclatée illustrant un étrier principal d'un balai d'essuie-glace et un déflecteur aérodynamique associé réalisés conformément aux enseignements de l'invention ;
- la figure 2 est une vue en perspective avec arrachement partiel illustrant la partie centrale de l'étrier du balai d'essuie-glace et le déflecteur aérodynamique ;
- les figures 3 et 4 sont des vues en section transversale, selon les lignes 3-3 et 4-4 de la figure 1, illustrant le déflecteur aérodynamique en position montée sur l'étrier central du balai d'essuie-glace ;
- les figures 5 et 6 sont des vues en section transversale d'une variante selon les figures 3 et 4.

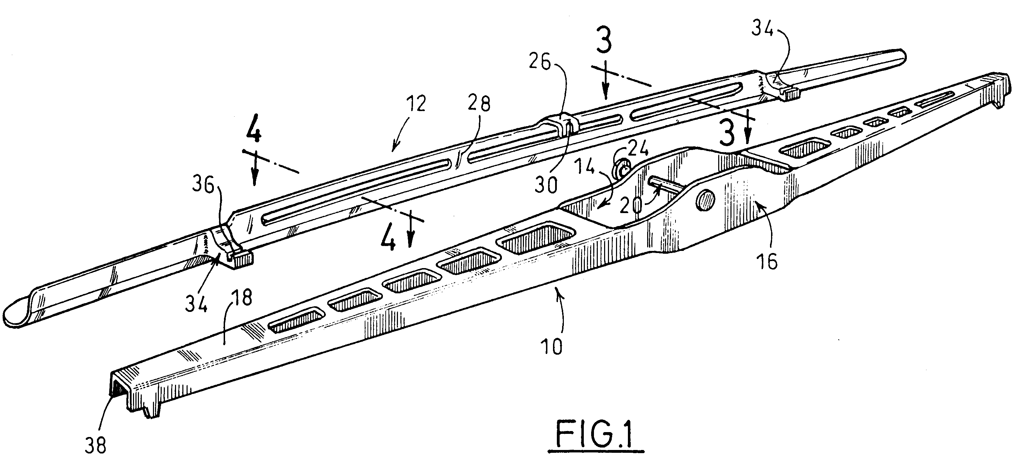

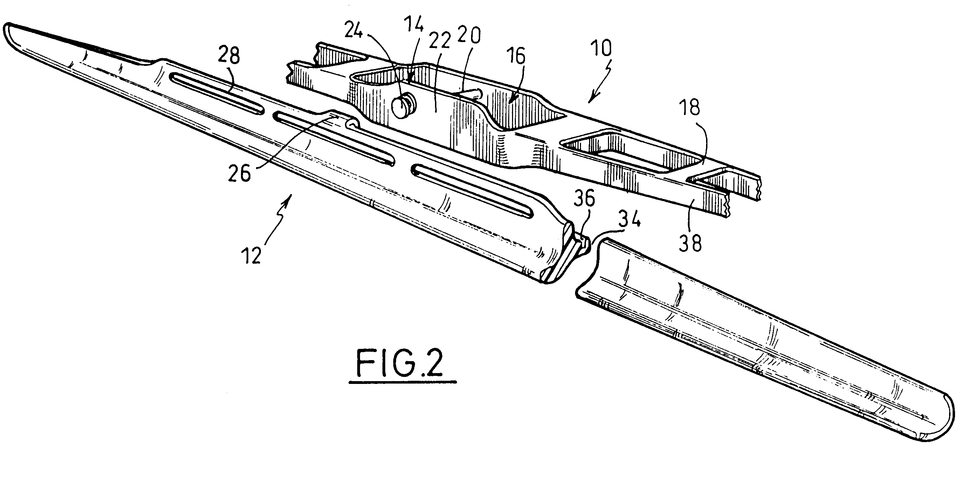

On a illustré sur les figures 1 et 2, un étrier ou palonnier central 10 appartenant à un balai d'essuie-glace qui est équipé d'un déflecteur aérodynamique 12.

L'étrier central 10 est prévu pour recevoir de manière articulée, selon une technique connue, plusieurs étriers ou palonniers d'extrémités (non représentés) qui portent une raclette d'essuyage d'une vitre à essuyer.

L'étrier principal 10 comporte deux joues latérales parallèles 14 et 16 qui sont reliées entre elles par un dos longitudinal supérieur ajouré 18.

Dans sa partie centrale, l'étrier principal 10 comporte un axe 20 d'articulation de l'étrier 10 sur l'extrémité d'un bras d'essuie-glace (non représenté) au moyen d'un connecteur d'articulation (non représenté) reçu dans le logement central délimité par les faces internes en vis-a-vis des joues latérales 14 et 16. Selon un mode de réalisation de

l'invention, et comme on peut le voir notamment sur la figure 2, l'axe d'articulation 20 fait saillie transversalement au-delà de la face latérale 22 de la joue 14 et comporte un collet radial d'extrémité 24 qui constitue un collet d'accrochage au sens de l'invention.

Le déflecteur aérodynamique 12 est un élément moulé en matière plastique qui est prévu pour s'étendre longitudinalement en regard de l'essuie-glace, et notamment principalement en regard de la face latérale 22 de l'étrier principal 10 du balai d'essuie-glace.

Pour permettre sa fixation par accrochage sur l'étrier 10, le déflecteur aérodynamique 12 comporte une patte centrale d'accrochage 26 qui s'étend transversalement en saillie depuis la face latérale interne 28 du déflecteur aérodynamique 12 qui s'étend en regard de la face latérale 22 de la joue latérale 14 de l'étrier principal 10.

L'extrémité libre 27 de la patte centrale d'accrochage 26 est repliée à 90° selon une direction parallèle au plan de la face 28 et comporte une encoche centrale d'accrochage 30 qui se présente sous la forme d'une encoche en forme de U renversé ouverte vers le bas, c'est-à-dire en direction de la vitre à essuyer, et qui est susceptible de recevoir la portion d'extrémité 32 de l'axe d'articulation 20 qui se termine par le collet radial d'accrochage 24.

Le déflecteur aérodynamique 12 comporte également deux pattes opposées d'extrémités d'accrochage 34.

Les deux pattes d'extrémités 34 sont agencées sensiblement symétriquement de part et d'autre de la patte centrale d'accrochage 26.

Chaque patte d'extrémité 34 est également réalisée venue de matière avec le déflecteur aérodynamique 12 et s'étend transversalement en saillie depuis la face latérale 28 de ce dernier en direction de la face latérale 22 de la joue latérale 14 de l'étrier principal 10 du balai d'essuie-glace.

Chaque patte d'extrémité 34 comporte, au voisinage de son extrémité libre, une encoche d'accrochage 36 qui est réalisée sous la forme d'une rainure longitudinale et qui est tournée vers le haut, c'est-à-dire qui est ouverte dans la direction opposée à celle de l'encoche centrale d'accrochage 30 formée à l'extrémité libre recourbée 27 de la patte centrale d'accrochage 26.

Chacune des encoches 36 est conformée de manière à recevoir une portion en vis-à-vis du bord longitudinal inférieur 38 de la joue latérale 14 de l'étrier principal 10.

Le montage et la fixation du déflecteur aérodynamique 12 sur l'étrier principal 10 s'effectuent très facilement de la manière suivante.

L'opérateur commence par introduire le point d'accrochage central de l'étrier principal 10 constitué par l'extrémité 32 de l'axe d'articulation 20 avec son collet radial 24 dans l'encoche centrale 30 du déflecteur aérodynamique 12.

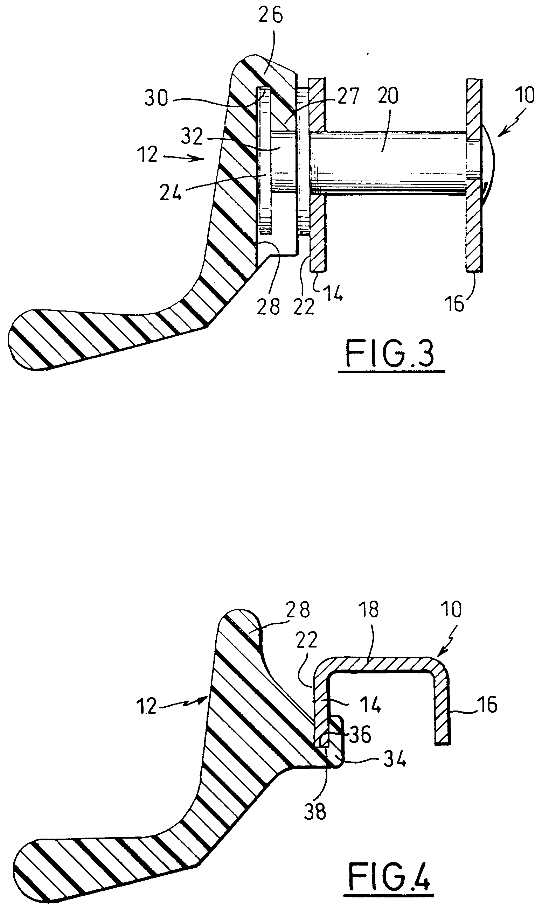

Dans cette position illustrée à la figure 3, le déflecteur aérodynamique 12 peut pivoter par rapport à l'étrier principal 10 autour de l'axe d'articulation 20.

L'opérateur fait pivoter le déflecteur aérodynamique 12 dans l'un ou l'autre sens de manière à faire passer l'une des pattes d'extrémités 34 en-dessous du bord inférieur 38 de la joue latérale 14 puis fait pivoter le déflecteur aérodynamique dans l'autre sens de manière à faire pénétrer le bord inférieur 38 dans l'encoche 36 formée dans cette patte d'accrochage 34.

Du fait de la possibilité pour le déflecteur aérodynamique 12 d'être déformé élastiquement, notamment s'il est réalisé par moulage en matière plastique, l'opérateur provoque ensuite une déformation élastique de la partie d'extrémité du déflecteur aérodynamique 12 qui n'est pas encore accrochée sur l'étrier principal 10 de manière à faire passer la patte d'extrémité d'accrochage 34, qui n'est pas encore accrochée, en-dessous du bord inférieur 38 de la joue latérale 14 et à faire pénétrer, sous l'effet de rappel élastique dû à la déformation élastique préalable du déflecteur aérodynamique 12, le bord 38 dans l'encoche correspondante 36.

A l'issue de ces opérations, le déflecteur aérodynamique 12 est monté et verrouillé élastiquement en position sur l'étrier principal 10 par rapport auquel il est maintenu tant longitudinalement que transversalement et verticalement.

Le démontage éventuel du déflecteur aérodynamique 12 s'effectue dans le sens inverse des opérations de montage décrites précédemment.

La conception de l'essuie-glace selon l'invention permet donc de réaliser un montage simple et économique du déflecteur aérodynamique 12 sur l'étrier principal 10 du balai d'essuie-glace sans faire appel à des vis ni à des moyens complexes d'accrochage.

En effet, l'essentiel des moyens d'accrochage est constitué par les pattes 26 et 34 qui sont réalisées venues de matière par moulage avec le déflecteur aérodynamique 12, la seule modification apportée à l'étrier principal 10, par rapport à un étrier classique, étant constituée par le prolongement 32, 24 de l'axe d'articulation 20.

La présente invention n'est pas limitée aux exemples décrits mais englobe toute variante.

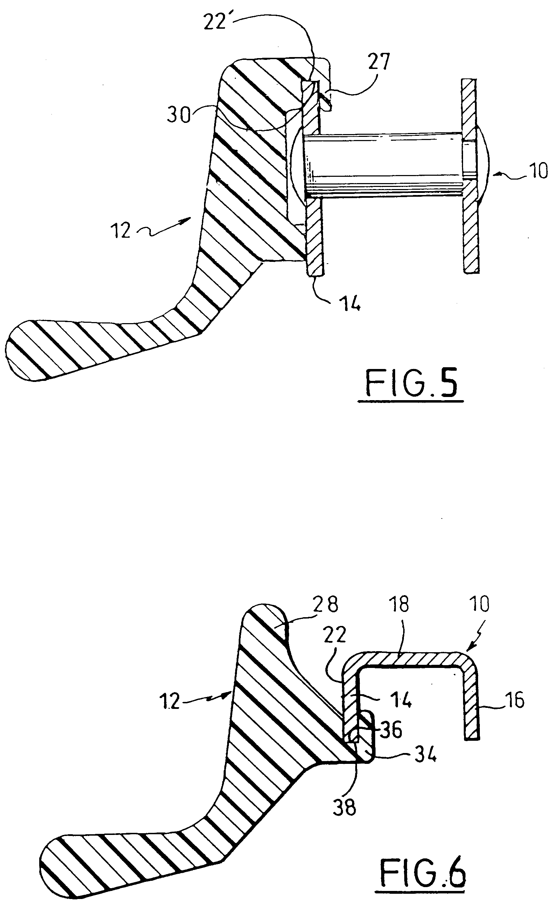

Notamment comme visible sur les figures 5 et 6 les encoches 30 et 36 subsistent toujours mais l'encoche 30, au lieu de coopérer avec un collet radial d'accrochage, coopère avec le bord supérieur 22' de la joue 14 en vis-à-vis.

Le montage de ce déflecteur s'effectue de la même manière que celle décrite précédemment en relation par accrochage de la partie centrale du déflecteur puis par pivotement pour que les encoches 36 coopèrent avec le bord inférieur 38 de la joue 14.

## Revendications

1. Essuie-glace pour véhicule automobile du type comportant un bras porte-balai, un balai d'essuie-glace (10) et un déflecteur aérodynamique (12) qui s'étend longitudinalement sur au moins une partie de la longueur du balai d'essuie-glace (10) auquel il est fixé, caractérisé en ce que le déflecteur aérodynamique (12) comporte une encoche centrale (30) ouverte selon une direction sensiblement perpendiculaire à la vitre à essuyer et deux encoches opposées d'extrémités (36) ouvertes selon une direction opposée à celle de l'encoche centrale (30), et en ce que les encoches (30,36) du déflecteur aérodynamique coopèrent avec trois points d'accrochage (24,38) formés en vis-à-vis sur l'essuie-glace.

2. Essuie-glace selon la revendication 1, caractérisé en ce que l'encoche centrale (30) présente en section la forme d'un U ouvert en direction de la vitre à essuyer.

3. Essuie-glace selon la revendication 1 ou 2, caractérisé en ce qu'il comporte une structure de répartition de pression comportant au moins un étrier (10) articulé autour d'un axe d'articulation (20) perpendiculaire à la direction générale du balai, et en ce qu'une extrémité (32,24) de l'axe d'articulation (20) fait saillie transversalement en direction du déflecteur aérodynamique (12) pour constituer un point d'accrochage central reçu dans l'encoche centrale (30) du déflecteur aérodynamique (12).

4. Essuie-glace selon la revendication 2 ou 3, caractérisé en ce que l'encoche centrale (30) coopère avec un collet radial d'accrochage (24) issu de l'extrémité libre ((32) de l'axe d'articulation (20).

5. Essuie-glace selon la revendication 2, caractérisé en ce que l'encoche centrale (30) coopère avec le bord supérieur (22') d'une joue latérale (14) en vis-à-vis du balai d'essuie-glace (10).

6. Essuie-glace selon l'une des revendications 2 à 5, caractérisé en ce que le déflecteur aérodynamique (12) comporte une patte centrale d'accrochage (26,27) qui fait saillie transversalement en direction du balai d'essuie-glace (10) et dont l'extrémité libre (27) comporte l'encoche centrale (30).

7. Essuie-glace selon l'une quelconque des revendications 2 à 6, caractérisé en ce que le déflecteur aérodynamique (12) comporte deux pattes opposées d'extrémités (34) d'accrochage qui font saillie transversalement en direction du balai d'essuie-glace (10) et dont chacune (34) comporte à son extrémité libre une encoche (36) qui coopère avec le bord inférieur (38) d'une joue latérale en vis-à-vis (14) du balai d'essuie-glace (10).

8. Essuie-glace selon les revendications 6 et 7 caractérisé en ce que lesdites pattes (26,34) s'étendent transversalement en saillie depuis une face latérale (28) du déflecteur aérodynamique (12) qui s'étend en regard d'une joue latérale en vis-à-vis (14) du balai d'essuie-glace (10).

9. Essuie-glace selon l'une des revendications 7 ou 8, caractérisé en ce que le balai d'essuie-glace comporte une structure de répartition de pression comportant au moins un étrier central (10), et en ce que lesdites pattes opposées d'extrémités (34) coopèrent avec le bord inférieur (38) d'une joue latérale en vis-à-vis (14) de l'étrier central (10).

10. Essuie-glace selon l'une quelconque des revendications précédentes, caractérisé en ce que le déflecteur aérodynamique (12) est déformable élastiquement selon une direction sensiblement perpendiculaire à la direction longitudinale générale du déflecteur aérodynamique pour permettre son accrochage sur l'essuie-glace.

## Claims

1. A screen wiper for a motor vehicle, of the type comprising a blade-carrying arm, a screen wiper blade (10) and an aerodynamic deflector (12), which extends longitudinally over at least part of the length of the screen wiper blade (10), to which it is fixed, characterised in that the aerodynamic deflector (12) has a central notch (30) which is open in a direction substantially at right angles to the glass surface to be swept, together with two opposed end notches (36) which are open in a direction opposite to that of the central notch (30), and in that the notches (30, 36) of the aerodynamic deflector cooperate with three anchor points (24, 38) formed on the screen wiper in facing relationship with the notches.

2. A screen wiper according to Claim 1, characterised in that the central notch (30) has a U-shaped cross section which is open towards the glass surface to be swept.

3. A screen wiper according to Claim 1 or Claim 2, characterised in that it includes a pressure distributing structure comprising at least one yoke (10) which is articulated about a pivot pin (20) extending at right angles to the general direction of the blade, and in that one end (32, 24) of the pivot pin (20) projects transversely towards the aerodynamic deflector (12) so as to constitute a central anchor point which is received in the central notch (30) of the aerodynamic deflector (12).

4. A screen wiper according to Claim 2 or Claim 3, characterised in that the central notch (30) cooperates with a radial anchoring collar portion (24) projecting from the free end (32) of the pivot pin (20).

5. A screen wiper according to Claim 2, characterised in that the central notch (30) cooperates with the upper edge (22') of a side portion (14) of the screen wiper blade (10) in facing relationship with the deflector.

6. A screen wiper according to one of Claims 2 to 5, characterised in that the aerodynamic deflector (12) has a central hooking lug (26, 27) which projects transversely towards the screen wiper blade (10), and which has a free end (27) which defines the central notch (30).

7. A screen wiper according to any one of Claims 2 to 6, characterised in that the aerodynamic deflector (12) has two opposed end hooking lugs (34) which project transversely towards the screen wiper blade (10), and each of which (34) has at its free end a notch (36) that cooperates with the lower edge (38) of a side portion (14) of the screen wiper blade (10) in facing relationship with it.

8. A screen wiper according to Claims 6 and 7, characterised in that the said lugs (26, 34) extend transversely, projecting from a side face (28) of the aerodynamic deflector (12) which is in facing relationship with a side portion (14) of the screen wiper blade (10).

9. A screen wiper according to Claim 7 or Claim 8, characterised in that the screen wiper blade includes a pressure distributing structure which comprises at least one central yoke (10), and in that the said opposed end lugs (34) cooperate with the lower edge (38) of a side portion (14) of the central yoke (10) in facing relationship with the deflector.

10. A screen wiper according to any one of the preceding Claims, characterised in that the aerodynamic deflector (12) is deformable elastically in a direction substantially at right angles to the general longitudinal direction of the aerodynamic deflector, so as to enable it to be anchored on the screen wiper.

## Patentansprüche

1. Scheibenwischer in der Ausführung mit einem Scheibenwischerarm, einem Scheibenwischerblatt (10) und mit einem aerodynamischen Windabweiser (12), der sich in Längsrichtung zumindest auf einem Teil der Länge des Wischerblatts (10) erstreckt, an dem er befestigt ist, **dadurch gekennzeichnet,** daß der aerodynamische Windabweiser (12) eine mittige Ausklinkung (30), die in einer Richtung offen ist, die in etwa senkrecht zu der zu wischenden Fläche verläuft, und zwei gegenüberliegende endseitige Ausklinkungen (36) enthält, die in einer Richtung offen sind, die zur Richtung der mittigen Ausklinkung (30) entgegengesetzt ist, und daß die Ausklinkungen (30, 36) des aerodynamischen Windabweisers mit drei Einhakpunkten (24, 38) zusammenwirken, die gegenüberliegend am Wischerblatt ausgebildet sind.

2. Scheibenwischer nach Anspruch 1 , **dadurch gekennzeichnet,** daß die mittige Ausklinkung (30) im Querschnitt die Form eines U aufweist, das in Richtung der zu wischenden Scheibe offen ist.

3. Scheibenwischer nach Anspruch 1 oder 2 , **dadurch gekennzeichnet,** daß er eine Druckverteilungsstruktur mit mindestens einem Bügel (10) enthält, der um einen senkrecht zur Gesamtrichtung des Wischerblatts angeordneten Gelenkbolzen (20) angelenkt ist, und daß ein Ende (32, 34) des Gelenkbolzens (20) quer in Richtung des aerodynamischen Windabweisers (12) vorspringt, um einen mittigen Einhakpunkt zu bilden, der in die mittige Ausklinkung (30) des aerodynamischen Windabweisers (12) eingesetzt wird.

4. Scheibenwischer nach Anspruch 2 oder 3 , **dadurch gekennzeichnet,** daß die mittige Ausklinkung (30) mit einem radialen Einhakbund (24) zusammenwirkt, der aus dem freien Ende (32) des Gelenkbolzens (20) herausgearbeitet ist.

5. Scheibenwischer nach Anspruch 2 , **dadurch gekennzeichnet,** daß die mittige Ausklinkung (30) mit der Oberkante (22') einer gegenüberliegenden Seitenwand (14) des Wischerblatts (10) zusammenwirkt.

6. Scheibenwischer nach einem der Ansprüche 2 bis 5, **dadurch gekennzeichnet,** daß der aerodynamische Windabweiser (12) einen mittigen Einhakansatz (26, 27) umfaßt, der quer in Richtung des Wischerblatts (10) vorspringt und dessen freies Ende (27) die mittige Ausklinkung (30) enthält.

7. Scheibenwischer nach einem der Ansprüche 2 bis 6, **dadurch gekennzeichnet,** daß der aerodynamische Windabweiser (12) zwei gegenüberliegende endseitige Einhakansätze (34) umfaßt, die quer in Richtung des Wischerblatts (10) vorspringen und die jeweils (34) an ihrem freien Ende eine Ausklinkung (36) aufweisen, die mit der Unterkante (38) einer gegenüberliegenden Seitenwand (14) des Wischerblatts (10) zusammenwirkt.

8. Scheibenwischer nach den Ansprüchen 6 und 7, **dadurch gekennzeichnet,** daß sich die besagten Ansätze (26, 34) quer vorspringend von einer Seitenfläche (28) des aerodynamischen Windabweisers (12) aus erstrecken, die sich gegenüber einer gegenüberliegenden Seitenwand (14) des Wischerblatts (10) erstreckt.

9. Scheibenwischer nach einem der Ansprüche 7 oder 8, **dadurch gekennzeichnet,** daß das Wischerblatt eine Druckverteilungsstruktur mit mindestens einem Mittelbügel (10) enthält und daß die gegenüberliegenden endseitigen Ansätze (34) mit der Unterkante (38) einer gegenüberliegenden Seitenwand (14) des Mittelbügels (10) zusammenwirken.

10. Scheibenwischer nach einem der vorangehenden Ansprüche, **dadurch gekennzeichnet**, daß der aerodynamische Windabweiser (12) entlang einer Richtung elastisch verformbar ist, die in etwa senkrecht zur Längsrichtung des aerodynamischen Windabweisers verläuft, um sein Einhaken am Scheibenwischer zu ermöglichen.
